# EUROPEAN PATENT APPLICATION

(11) **EP 1 308 083 A2**
(43) Date of publication of application: **07.05.2003**
(21) Application number: 02023822.6
(22) Date of filing: 23.10.2002
(51) Int. Cl.: A01G 9/22, A01G 13/02

(54) **Screening element of open-mesh fabric and methods for producing screens of open-mesh fabric**

(30) Priority: 02.11.2001 IT MI20012307
(71) Applicant: Arrigoni S.p.A., 22029 Uggiate Trevano (CO) (IT)
(72) Inventor: Sampietro, Eugenio, 22012 Cernobbio (CO) (IT)
(74) Representative: Faraggiana, Vittorio, Dr. Ing.

(57) **Abstract**

A screening element (10) comprises an open-mesh fabric (11) made up of interwoven threads to form warp threads (12) and weft threads (13). A strip element (14) is held fast between, and is parallel to two warp threads. The strip element (14) is flexible along its length parallel to the warp threads and basically rigid in the plane of the fabric transversally to the warp threads. This strip element acts as a hooking connection for support elements (16, 17) of the screening element. The strip element is tensioned longitudinally at its ends and the fabric is transversally tensioned by means of transversal actions on the strip element itself.

## Description

The present invention refers to a screening element of open-mesh fabric, for example for producing sight screens or for protection against the sun or atmospheric or other agents. The invention also refers to a method for producing the element and a method for producing screens.

Screenings of open-mesh fabric made of warp threads and threads or strips of interwoven wefts, with comparatively wide warp, are known. These fabrics are often used in the agricultural/gardening sector both for the protection of cultivated crops from atmospheric agents (wind, hail) and for the specific reduction of solar radiation.

Above all for the latter purpose, the weft is often made up of strips with at least one reflecting side.

These applications usually entail fastening the side edges of the fabric to metal, wood or cement structures at distances varying from 50 cm to 1 meter.

The point at which the fabric is fastened to the structure is usually subject to considerable stress considering that just a few centimeters of length have to support the force exerted by one section of at least 50/100 cm of fabric. This implies that only a minimum part of the resistance to the transversal tensile strength of the fabric, usually between 4000 and 12000 n/m, can be used as the ratio of connection/support length is between 1/10 and 1/20.

The edge of the fabric near the points at which it is fastened forms a sequence of loops that seem impossible to eliminate by further traction of the fabric, as the maximum resistance values would be exceeded. All the more reason when considering applications subject to the force of wind. Therefore the fastening points have to be very close to each other, with greater cost of materials and labor.

Still in the known technique, attempt was made to reduce the problem by providing the edges of the fabric with a more resistant selvage, however with poor results, the tensile strength not increasing enough to produce straight edges under load and with high resistance to stress made by wind.

The object of the present invention is to obviate the inconveniences mentioned above by providing a screening element and realization methods that lead to optimum fastening, with basically straight edges and high tensile strength.

In view of this object, and in accordance with the invention, a screening element was devised, comprising an open-mesh fabric made up of interwoven threads to constitute warp threads and weft threads, characterized in that a strip element, flexible along its length parallel to the warp threads and basically rigid in the plane of the fabric transversally to the warp threads, is held fast between the weft threads, between, and parallel to, two warp threads, the strip element acting as a hooking connection for elements supporting the screening element.

Still according to the invention a method for realizing a screening element was devised, comprising the phase for realizing an open-mesh fabric made up of interwoven threads to constitute warp threads and weft threads, during the weaving inserting a strip element between the weft threads placed between, and parallel to, two warp threads, the strip element being flexible along its length parallel to the warp threads and basically rigid in the plane of the fabric transversally to the warp threads, the strip element acting as a hooking connection for elements supporting the screening element.

Finally, a method for producing a screen with a screening element was also devised, comprising an open-mesh fabric made up of interwoven threads to constitute warp threads and weft threads, a strip element being held fast between the weft threads, placed between, and parallel to, two warp threads, the strip element being flexible along its length parallel to the warp threads and basically rigid in the plane of the fabric transversally to the warp threads, the strip element acting as a hooking connection for elements supporting the screening element, in which the strip element is tensioned at about at least 30% of its breaking load and in which the open-mesh fabric is tensioned by acting on the strip element transversally to it.

To clarify the explanation of the innovative principles of the present invention and its advantages compared to the known technique, with the aid of the attached drawings, the description of an embodiment applying said principles herewith follows. In the drawings:
- Figure 1 represents a partial plan view of a covering element in accordance with the invention;
- Figure 2 represents a section view taken along the line II-II of Figure 2.

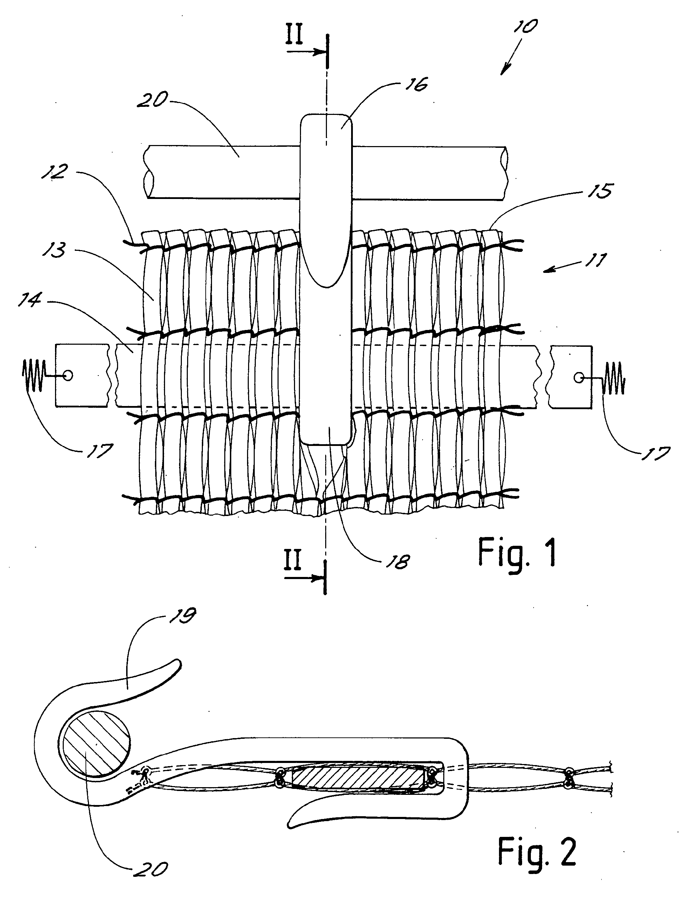

With reference to the Figures, a screening element (indicated generically with 10) comprising an open-mesh fabric 11 made up of interwoven threads to constitute warp threads 12 and weft threads 13, is shown in Figure 1. The warp threads are spaced out to leave the weft threads relatively slack and separable. Advantageously, the weft threads are in the form of a flattened band, made of plastic film and have at least one reflecting side so as to give at least one side of the fabric a high capacity to reflect solar rays. Fabric of such a type is known generically and will not therefore be described any further. It must be pointed out that the term "weaving" and "fabric" are here intended in the broad sense, the fabric being more like a mesh netting than a real fabric, also depending on the amount of space required between the mesh, also to reduce the resistance to wind or the amount of light screened.

As can be seen still in Figure 1, a strip element 14 is held fast between, and parallel to, two warp threads 12 near the edge 15 of the fabric. Advantageously, the warp threads chosen are the second last and the third last. The strip element is put into place directly while the fabric is being made, advantageously between opposite wefts. In this manner the stability of the strip element in the plane of the fabric is guaranteed.

This strip element is flexible along its length parallel to the warp threads and basically rigid (compared to the deformation of the fabric) in the plane of the fabric transversally to the warp threads. In other words, the elastic deformation of the strip is markedly less than that of the fabric in the same direction.

As can be clearly seen in Figure 2, it has also been found particularly advantageous for the strip element to have a rectangular transversal section, with ratio between the sides of between 1/10 and 1/20. Its width can be almost equal to the distance between two warp threads.

The flexibility of the strip element along its length, that is the low moment resistant to flexure, does not hinder the normal rolling up of the fabric. In addition, the low thickness of the strip element prevents excessive dimorphism of the roll. The strip element is advantageously made of an extruded thermoplastic material.

The strip element 14 acts as a hooking connection for elements supporting the screening element. In other words, the supporting forces of the fabric (whether it is placed vertically or horizontally or slanting) are not discharged directly onto the fabric but through the strip element, which does not impede the slide other than by the friction with the fabric.

The support elements with which the screening is fitted comprise at intervals first elements 16 destined to tension the fabric and acting on the strip element 14 transversally to it and second elements 17 destined to tension the strip element longitudinally.

Advantageously, the second elements 17 (positioned at the ends of the strip) comprise elastically supple known elements, such as an elastic expander, fitted with a simple dynamometric system to permit limited oscillation of the fabric under the action of wind or the impact of foreign bodies.

One of the said first support elements can be seen in the figures, and is made with a hook at the end 18 that passes through the fabric from the side of the strip element opposite the edge of the fabric itself so as to hook onto the strip element on that side. The opposite end of the hook element can be connected to a support outside the screening element. In the embodiment shown, this opposite end of the hook element protrudes from the edge of the fabric and is fitted with a hook 19 to catch hold of a suitable supported cable 20.

As can be seen, again in Figure 2, the end of the hook element that catches hold of the strip 14 is made up of arms placed basically parallel to be positioned in parallel and on the opposite sides of the strip element in the plane of the fabric. This brings about optimal distribution of the traction forces and reduces the rotation moment of the strip.

It has been found that it is preferable to tension the strip at a value of about at least 30% of its breaking load and, advantageously, at a value not exceeding about 50% of the breaking load.

If the covering is mounted horizontally, there will be two strip elements, near the two opposite edges of the fabric. Several strip elements spaced over the width of the width of fabric can also be incorporated into the fabric, so as to reduce the width of the screening (by cutting the fabric or folding over along the edges) according to the specific needs, choosing the strip element in the most suitable position for supporting the fabric.

Tensioned from the ends at a suitable value, the strip element is hooked up at intervals to the supports to carry out the transversal traction on the fabric, and to complete the mounting of the screen.

At this point it is clear as to how the preset objects are reached.

It was surprising to find that the edges of the fabric installed according to the invention are almost straight between fastenings, which are spaced out at even more than a meter from each other, with more than satisfying uniform distribution of the attachment forces along the entire length. This result is absolutely unattainable with the fabrics and production and mounting methods of known techniques.

Again surprisingly, the strip element, even being free to slide and, apparently, to rotate in the fabric, remains in its "flat" position in the fabric, giving high resistance against the "twisting" of the edges of the fabric in the transversal direction which is the hanging direction of the fabric to the supports.

Naturally, the description made above of an embodiment applying the innovative principles of the present invention is given as example of said innovative principles and therefore must not be taken as limiting in the patent sphere herein claimed. For example, the exact dimensions, reciprocal proportions and positions of weft and warp can vary according to specific needs, as an expert technician can easily imagine. The materials can also vary, especially the screen strips in reflecting and/or opaque material (on both sides or alternatively on one side). The exact distance of the strip element from the edge of the fabric will depend on the specific needs for fastening the fabric.

## Claims

1. Screening element comprising open-mesh fabric made up of interwoven threads to constitute warp threads and weft threads, **characterized in that** a strip element is present between, and parallel to, two warp threads, held fast between the weft threads, flexible along its length parallel to the warp threads and basically rigid in the plane of the fabric transversally to the warp threads, the strip element acting as a hooking connection for elements supporting the screening element.

2. Screening element according to claim 1, **characterized in that** said support elements comprise first elements destined to tension the fabric and acting on the strip element transversally to it and second elements destined to tension the strip element longitudinally.

3. Screening element according to claim 2, **characterized in that** the second elements comprise elastically supple elements.

4. Screening element according to claim 3, **characterized in that** the second elements comprise elastic expanders for tensioning the strip element at a value of at least about 30% of its breaking load.

5. Screening element according to claim 3, **characterized in that** the second elements comprise elastic expanders for tensioning the strip element at a value of not exceeding about 50% of its breaking load.

6. Screening element according to claim 1, **characterized in that** the strip element has a rectangular transversal section.

7. Screening element according to claim 2, **characterized in that** the strip element has a ratio between the sides of between 1/10 and 1/20.

8. Screening element according to claim 1, **characterized in that** the strip element is made of an extruded thermoplastic material.

9. Screening element according to claim 1, **characterized in that** the weft threads are in the form of a flattened band.

10. Screening element according to claim 9, **characterized in that** the flattened bands are made of a plastic film material.

11. Screening element according to claim 9, **characterized in that** the flattened bands have at least one reflecting side.

12. Screening element according to claim 1, **characterized in that** the support elements comprise hook elements with an end that passes through the fabric from the side of the strip element opposite said edge of the fabric to hook onto said strip element on said side, the hook element having the opposite end suitable for being connected to a support of the screening element.

13. Screening element according to claim 12, **characterized in that** the said opposite end of the hook element protrudes from the edge of the fabric and is in the form of a hook.

14. Screening element according to claim 12, **characterized in that** the hook element has the first end with basically parallel arms to be positioned parallel and on the opposite sides of the strip element in the plane of the fabric.

15. Screening element according to claim 1, **characterized in that** there are two strip elements, each one positioned near an opposite edge of the open-mesh fabric.

16. Screening element according to claim 1, **characterized in that** the width of the strip element is basically near the distance between the two warp threads.

17. Method for producing a screening element comprising the phases of producing open-mesh fabric made up of interwoven threads to constitute warp threads and weft threads, during the weaving inserting a strip element between the weft threads placed between, and parallel to, two warp threads, the strip element being flexible along its length parallel to the warp threads and basically rigid in the plane of the fabric transversally to the warp threads, the strip element acting as a hooking connection for elements supporting the screening element.

18. Method for producing a screening with a screening element comprising an open-mesh fabric made up of interwoven threads to constitute warp threads and weft threads, a strip element being held fast between the weft threads, positioned between, arid parallel to, two warp threads, the strip element being flexible along its length parallel to the warp threads and basically rigid in the plane of the fabric transversally to the warp threads, the strip element acting as a hooking connection for elements supporting the screening element, in which the strip element is tensioned at a value of at least about 30% of its breaking load and in which the fabric is tensioned by acting on the strip element transversally to it.
